# EUROPÄISCHE PATENTSCHRIFT

(11) **EP 3 012 088 B1**
(45) Veröffentlichungstag und Bekanntmachung des Hinweises auf die Patenterteilung: **06.03.2019**
(21) Anmeldenummer: 15190902.5
(22) Anmeldetag: 21.10.2015
(51) Int. Cl.: B29C 49/42, B65G 47/30

(54) **VORRICHTUNG UND VERFAHREN ZUM TRANSPORTIEREN VON KUNSTSTOFFVORFORMLINGEN MIT ZWEIFACHEM TEILUNGSVERZUG**
DEVICE AND METHOD FOR TRANSPORTING PLASTIC PRE-FORMS WITH DUAL DIVIDING WARPING
DISPOSITIF ET PROCEDE DE TRANSPORT DEBAUCHES EN PLASTIQUE AVEC SEPARATION DOUBLE RETARDEE

(30) Priorität: 21.10.2014 DE 102014115302
(43) Veröffentlichungstag der Anmeldung: 27.04.2016
(73) Patentinhaber: Krones AG, 93073 Neutraubling (DE)
(72) Erfinder: Domeier, Bernhard, 93073 Neutraubling (DE); Wels, Harald, 93073 Neutraubling (DE); Penninger, Josef, 93073 Neutraubling (DE); Hausladen, Wolfgang, 93073 Neutraubling (DE)
(74) Vertreter: Bittner, Bernhard

(56) Entgegenhaltungen:
- WO-A1-2011/131704
- WO-A2-2010/013200
- DE-U1- 29 716 268
- DE-U1-202013 008 055
- US-A- 4 391 578

## Beschreibung

Die vorliegende Erfindung bezieht sich auf eine Vorrichtung und ein Verfahren zum Behandeln von Kunststoffvorformlingen. Aus dem Stand der Technik ist es bekannt, dass Kunststoffbehältnisse dadurch gefertigt werden, dass zunächst Kunststoffvorformlinge in einem Ofen erwärmt werden und anschließend in diesem erwärmten Zustand von einer Umformungseinrichtung, wie beispielsweise einer Streckblasmaschine, in Kunststoffbehältnisse umgeformt werden. Innerhalb dieses Ofens werden dabei die Kunststoffvorformlinge üblicherweise in einem sehr geringen Abstand bzw. einer sehr geringen Teilung geführt. Diese kann beispielsweise bei 38 mm liegen. Die nachfolgenden Umformungseinrichtungen hingegen benötigen sehr viel größere Teilungen, beispielsweise von 445 mm, da die einzelnen Umformungsstationen relativ großvolumig sind.

Aus dem Stand der Technik ist es daher bekannt, dass zwischen dem Ofen und der Umformungsstation sogenannte Teilungsverzugssterne eingesetzt werden, welche eine Teilung zwischen nacheinander folgenden Kunststoffvorformlingen erhöhen. Diese Technik funktioniert bei geringeren Transport- und Arbeitsgeschwindigkeiten gut, stößt jedoch insbesondere bei großen Transportgeschwindigkeiten an ihre Grenzen. Dies liegt daran, dass diese Teilungsverzugssterne bei derartigen Maschinen sehr hohe Beschleunigungen auf die Kunststoffvorformlinge ausüben müssen. Dies wiederum führt dazu, dass es bei den Kunststoffvorformlingen zu Verformungen derselben kommen kann. Daneben sind aus dem Stand der Technik auch Umformungseinrichtungen bekannt, welche eine Umformung der Kunststoffvorformlinge in einem Reinraum ermöglichen. Bei diesen Ausführungsformen müssen auch die genannten Teilungsverzugssterne schmiermittelfrei arbeiten. In diesem Falle sind insbesondere bei den hohen Beschleunigungen diese Teilungsverzugssterne ein Schwachpunkt der Anlage.

Vorrichtungen und Verfahren nach den Oberbegriffen der unabhängigen Ansprüchen werden in WO2011131704 offenbart. Weitere Vorrichtungen und Verfahren werden in WO2010013200, DE29716268U, DE202013008055U und US4391578 offenbart.

Der vorliegenden Erfindung liegt daher die Aufgabe zugrunde, hohe Teilungsverzüge zwischen den Kunststoffvorformlingen auch bei hohen Arbeitsgeschwindigkeiten zu erreichen. Weiterhin soll der Verschleiß derartiger Anlagen verringert werden.

Diese Aufgaben werden erfindungsgemäß durch die Gegenstände der unabhängigen Patentansprüche erreicht. Vorteilhafte Ausführungsformen und Weiterbildungen sind Gegenstand der Unteransprüche.

Eine erfindungsgemäße Vorrichtung zum Behandeln von Kunststoffvorformlingen weist eine erste Transporteinrichtung auf, welche die Kunststoffvorformlinge entlang eines vorgegebenen Transportpfads mit einer ersten vorgegebenen Teilung transportiert. Weiterhin weist die Vorrichtung eine Erwärmungseinrichtung auf, welche die Kunststoffvorformlinge wenigstens zeitweise während ihres Transports erwärmt sowie eine in der Transportrichtung der Kunststoffvorformlinge stromabwärts bezüglich der ersten Transporteinrichtung angeordnete zweite Transporteinrichtung, welche eine Vielzahl von Halteeinrichtungen zum Halten der Kunststoffvorformlinge aufweist und welche dazu geeignet und bestimmt ist, eine Teilung zwischen zwei aufeinander folgenden Kunststoffvorformlingen zu verändern und insbesondere zu vergrößern.

Erfindungsgemäß weist die Vorrichtung einen (weiteren) wenigstens bereichsweise in der Transportrichtung der Kunststoffvorformlinge zwischen der ersten Transporteinrichtung und der zweiten Transporteinrichtung angeordneten Transportabschnitt auf, in dem eine Teilung zwischen den Kunststoffvorformlingen verändert wird.

Es wird daher erfindungsgemäß vorgeschlagen, dass eine Teilung in zwei Abschnitten vorgenommen wird, um auf diese Weise zu hohen Teilungsgeschwindigkeiten bzw. Beschleunigungen, welche auf die Kunststoffvorformlinge wirken, entgegen zu wirken. Auf diese Weise kann insbesondere die Belastung der Preforms durch den oben erwähnten Teilungsverzugsstern bzw. die Belastung durch die zweite Transporteinrichtung verringert werden. So wäre es beispielsweise möglich, dass eine weitere, wenigstens bereichsweise in der Transportrichtung der Kunststoffvorformlinge zwischen der ersten Transporteinrichtung und der zweiten Transporteinrichtung angeordnete Transporteinrichtung zum Transportieren der Kunststoffvorformlinge vorgesehen ist, welche ebenfalls dazu geeignet und dazu bestimmt ist, eine Teilung zwischen den Kunststoffvorformlingen zu verändern und insbesondere zu vergrößern.

Die Vorrichtung weist eine weitere Transporteinrichtung auf, die in der Transportrichtung der Kunststoffvorformlinge zwischen der ersten Transporteinrichtung und der zweiten Transporteinrichtung angeordnet ist.

Die Kunststoffvorformlinge werden mittels dieser weiteren Transporteinrichtung mit einer Teilung transportiert werden, welche von der ersten Teilung abweicht und welche insbesondere größer ist als die erste Teilung. Unter einer Teilung wird insbesondere ein Abstand zwischen zwei in der Transporteinrichtung benachbart transportierten Kunststoffvorformlingen verstanden.

Bei einer weiteren vorteilhaften Ausführungsform weist die zweite Transporteinrichtung einen drehbaren Träger auf, an dem eine Vielzahl von Halteelementen angeordnet ist. Dabei können diese Halteelemente wiederum an Haltearmen angeordnet sein. Vorteilhaft sind diese Haltearme dabei schwenkbar an dem besagten drehbaren Träger angeordnet. Durch ein solches Schwenken kann die Teilung zwischen den Kunststoffvorformlingen verändert werden.

Bei der zweiten Transporteinrichtung handelt es sich um einen sogenannten Teilungsverzugsstern, der insbesondere zum Erhöhen einer Teilung zwischen benachbarten Kunststoffvorformlingen geeignet ist.

Die Vorrichtung weist nach der zweiten Transporteinrichtung eine Umformungseinrichtung auf, welche die Kunststoffvorformlinge zu Kunststoffbehältnissen umformt. Bei dieser Umformungseinrichtung handelt es sich insbesondere um eine Blasformmaschine und besonders bevorzugt um eine sogenannte Streckblasmaschine. Diese Umformungseinrichtung kann sich dabei unmittelbar an die zweite Transporteinrichtung anschließen, es wäre jedoch auch denkbar, dass zwischen der zweiten Transporteinrichtung und der Umformungseinrichtung ein weiteres Aggregat, wie etwa eine Sterilisationseinrichtung angeordnet ist. Diese Umformungseinrichtung kann dabei ebenfalls einen drehbaren Träger aufweisen, an dem eine Vielzahl von Umformungsstationen an geordnet ist, in denen die Kunststoffvorformlinge umgeformt werden.

Daneben könnte jedoch an dieser Stelle eine Sterilisationseinrichtung vorgesehen sein, welche eine Sterilisation der Kunststoffvorformlinge vornimmt.

Bei der Erwärmungseinrichtung handelt es sich insbesondere um einen Infrarotofen, es wäre jedoch auch die Verwendung eines Mikrowellenofens denkbar.

Bei einer weiteren vorteilhaften Ausführungsform weist die Heizeinrichtung eine Vielzahl von Heizelementen auf, welche bevorzugt stationär bezüglich des Transportpfades der Kunststoffvorformlinge angeordnet sind. Bei diesen Heizelementen kann es sich beispielsweise um Infrarotröhren handeln, welche sich besonders bevorzugt entlang des Transportpfades der Kunststoffvorformlinge wenigstens abschnittsweise erstrecken. Neben diesen Heizelementen können auch Reflektorelemente vorgesehen sein welche die Infrarotstrahlung auf die Kunststoffvorformlinge lenken.

Damit wird vorgeschlagen, dass zwei Beschleunigungsstrecken vorgesehen sind, welche eine Teilung zwischen den Kunststoffvorformlingen verändern und insbesondere vergrößern. Es wäre dabei möglich, dass die weitere Transporteinrichtung ebenfalls eine konstante Teilung aufweist und zwischen der ersten Transporteinrichtung und der weiteren Transporteinrichtung eine Beschleunigungsstrecke vorgesehen ist.

Bei einer weiteren vorteilhaften Ausführungsform weist die erste Transporteinrichtung ein umlaufendes Transportmittel auf, an dem eine Vielzahl von Halteelementen zum Halten der Kunststoffvorformlinge angeordnet ist. Auf diese Weise transportiert bevorzugt die erste Transporteinrichtung die Kunststoffvorformlinge vereinzelt. Vorteilhaft weisen dabei die Halteelemente Dorne auf, welche in die Mündungen der Kunststoffvorformlinge eingreifen, um diese so zu halten. Dabei kann weiterhin auch eine Dreheinrichtung vorgesehen sein, welche während der Erwärmung der Kunststoffvorformlinge eine Drehung derselben um deren Längsrichtung ermöglicht. Auf diese Weise kann eine gleichmäßige Erwärmung der Kunststoffvorformlinge erreicht werden.

Bei einer weiteren vorteilhaften Ausführungsform weist die Vorrichtung eine weitere, wenigstens bereichsweise in der Transportrichtung der Kunststoffvorformlinge zwischen der ersten Transporteinrichtung und der zweiten Transporteinrichtung angeordnete Transporteinrichtung zum Transportieren der Kunststoffvorformlinge auf, welche ebenfalls dazu geeignet und bestimmt ist, eine Teilung zwischen den Kunststoffvorformlingen zu verändern und/oder welche die Kunststoffvorformlinge mit einer weiteren Teilung transportiert, welche von der ersten Teilung abweicht und insbesondere größer ist als diese.

Bei einer weiteren vorteilhaften Ausführungsform weist auch die weitere Transporteinrichtung ein umlaufendes Transportmittel auf, an dem eine Vielzahl von Halteelementen zum Halten der Kunststoffvorformlinge angeordnet ist. Bei diesem Transportmittel kann es sich dabei um eine Transportkette oder ein Transportband handeln, an dem die einzelnen Halteelemente angeordnet sind. Vorteilhaft ist das umlaufende Transportmittel umlaufend mit Strecken unterschiedlicher Krümmung ausgebildet. So können etwa zwei halbkreisförmige Enden vorgesehen sein und dazwischen geradlinig verlaufende Transportstrecken.

Bei einer weiteren vorteilhaften Ausführungsform weist wenigstens eine Transporteinrichtung und bevorzugt die weitere Transporteinrichtung einen Träger auf und wenigstens ein Halteelement, welches beweglich gegenüber diesem Träger angeordnet ist. Bei dieser Ausführungsform ist bevorzugt der Träger stationär angeordnet und das Halteelement zum Halten der Kunststoffvorformlinge ist beweglich gegenüber diesem Träger ausgebildet. Bevorzugt dient dabei dieser Träger auch zum Führen des Haltelements. Bevorzugt weist die weitere Transporteinrichtung eine Vielzahl von Halteelementen auf, welche beweglich gegenüber diesem Träger angeordnet sind. Bevorzugt sind diese Halteelemente unabhängig voneinander gegenüber diesem Träger bewegbar. Durch diese unabhängige Bewegung kann auch die oben erwähnte Teilung zwischen den Halteelementen verändert werden.

Bevorzugt weist der Träger wenigstens ein magnetisches Element auf, welches insbesondere zum Bewegen der Halteelemente gegenüber dem Träger dient. Bei einer weiteren vorteilhaften Ausführungsform bildet der Träger einen umlaufenden Transportpfad für die Halteelemente aus. Weiterhin kann auch bevorzugt das Halteelement eine Motoreinrichtung und insbesondere einen Servomotor aufweisen, um das Halteelement gegenüber dem Träger zu bewegen. Weiterhin kann auch das Halteelement selbst an einem Trageelement angeordnet sein und dieses Trageelement wiederum beweglich an dem Träger.

Bei einer weiteren vorteilhaften Ausführungsform ist wenigstens ein Halteelement bzw. ein Trageelement, an dem dieses Halteelement angeordnet ist, zum magnetkraftabhängigen Bewegen ausgelegt wobei dies vorzugsweise in Wechselwirkung mit dem Träger der Transporteinrichtung erfolgt. Bevorzugt liegt das Halteelement gleitfähig auf dem Träger auf. Dabei kann ein Luftspalt zwischen dem Halteelement und dem Träger ausgebildet sein.

Bevorzugt ist an dem Halteelement und/oder einem das Halteelement haltenden Trageelement wenigstens ein Permanentmagnet angeordnet. Bevorzugt sind an diesem Halteelement wenigstens zwei Permanentmagneten angeordnet. An dem Träger ist bevorzugt wenigstens eine Magnetspule und ist bevorzugt eine Vielzahl von Magnetspulen angeordnet. Dabei ist es möglich, dass diese Magnetspulen individuell bestromt werden und durch dieses Bestromen ein Wanderfeld erzeugt wird, welches den Vorschub der Halteelemente bewirkt.

Bei einer weiteren vorteilhaften Ausführungsform weist wenigstens eine Transporteinrichtung und insbesondere die weitere Transporteinrichtung eine Positionserfassungseinrichtung auf, welche eine Position der Halteelemente gegenüber dem Träger erfasst. Daneben kann auch eine Erfassungseinrichtung vorgesehen sein, welche eine Geschwindigkeit der Halteelemente gegenüber dem Träger erfasst. Dabei kann diese Positionserfassungseinrichtung wenigstens ein Lichtschrankenelement aufweisen.

Bei einer weiteren vorteilhaften Ausführungsform überlappen eine von dem umlaufenden Transportmittel der ersten Transporteinrichtung eingeschlossene Ebene und eine von dem umlaufenden Transportmittel der weiteren Transporteinrichtung eingeschlossene Ebene miteinander. Vorteilhaft handelt es sich bei diesen jeweiligen Ebenen um horizontal verlaufende Ebenen, was insbesondere bedeutet, dass die von den einzelnen Transportmitteln erreichbaren Bereiche ebenfalls überlappen. Vorteilhaft existiert daher eine Ebene, durch welche beide Transportmittel hindurch verlaufen. Vorteilhaft steht diese Ebene bevorzugt zu dem Transportpfad bzw. der Transportrichtung der Kunststoffvorformlinge senkrecht. Dies wird genauer unter Bezugnahme auf die Figuren erläutert.

Bei einer weiteren vorteilhaften Ausführungsform ist die weitere Transporteinrichtung zur Übernahme von Kunststoffvorformlingen von der ersten Transporteinrichtung geeignet und dient auch hierzu. Vorteilhaft ist jedoch die weitere Transporteinrichtung auch zur Übergabe von Kunststoffvorformlingen an die erste Transporteinrichtung geeignet und dient auch hierzu.

Dabei ist es möglich, dass diese weitere Transporteinrichtung die Kunststoffvorformlinge mit einer langsameren Geschwindigkeit transportiert als die erste Transporteinrichtung. So ist es beispielsweise möglich, dass eine Zuführeinrichtung, wie etwa ein Eintaktstern, der weiteren Transporteinrichtung die Kunststoffvorformlinge übergibt und diese wiederum die Kunststoffvorformlinge an die erste Transporteinrichtung weitergibt. Nachdem die Kunststoffvorformlinge mit der ersten Transporteinrichtung transportiert wurden, können sie wieder an die weitere Transporteinrichtung, allerdings in einem anderen Bereich, übergeben werden und bevorzugt von dieser weiteren Transporteinrichtung an die oben erwähnte zweite Transporteinrichtung. Damit weist bevorzugt die Vorrichtung wenigstens drei Transporteinrichtungen auf, welche die Kunststoffvorformlinge mit zueinander unterschiedlichen Teilungen transportieren. Dabei ist bevorzugt die Teilung während des Transports mit der ersten Transporteinrichtung am geringsten und während des Transports mit der zweiten Transporteinrichtung am größten.

Bei einer weiteren vorteilhaften Ausführungsform weist die Vorrichtung wenigstens ein Halteelement zum Halten der Kunststoffvorformlinge auf, welches zeitweise an einem Transportmittel der ersten Transporteinrichtung und zeitweise an einem Transportmittel der weiteren Transporteinrichtung angeordnet ist. Auf diese Weise kann erreicht werden, dass das Halteelement gemeinsam mit einem etwa an diesem angeordneten Kunststoffvorformling von der ersten Transporteinrichtung an die weitere Transporteinrichtung übergeben wird. Auf diese Weise kann ein Abnehmen der Kunststoffvorformlinge zu diesem Zeitpunkt vermieden werden.

Es wird vielmehr das Halteelement mit dem Kunststoffvorformling weiter transportiert. Anstelle einer Transportkette kann jedoch auch ein Transportseil verwendet werden. So wäre es beispielsweise möglich, dass der Kunststoffvorformling mit der ersten Transporteinrichtung bis zu einem Umlenkrad geführt wird und im Bereich dieser Umlenkung auf das Transportmittel der weiteren Transporteinrichtung übergeben, beispielsweise umgehängt wird. Mittels dieses weiteren Transportmittels kann wiederum der Kunststoffvorformling bzw. können mehrere Kunststoffvorformlinge nunmehr mit einer höheren Geschwindigkeit und auch einer höheren Teilung transportiert und bevorzugt zu der zweiten Transporteinrichtung geführt werden. Auf diese Weise wäre es möglich, dass die Halteelemente auf dem zweiten Transportmittel, etwa einer zweiten Transportkette oder einem zweiten Seil, eine beispielsweise dreifache Teilung aufweisen. Nach der Übergabe der Kunststoffvorformlinge wäre es möglich, dass die Halteelemente wieder in ihre ursprüngliche Position, beispielsweise auf dem ersten Transportmittel (d.h. dem Transportmittel der ersten Transporteinrichtung) einkoppeln. Dabei wäre es jedoch möglich, dass die Halteelemente gleichzeitig einen weiteren Kunststoffvorformling in dieser Position aufnehmen.

Bei dieser Ausführungsform wird damit das gesamte Halteelement gemeinsam mit dem Kunststoffvorformling von dem Transportmittel der ersten Transporteinrichtung ausgekoppelt und in das Transportmittel der weiteren Transporteinrichtung eingekoppelt. Es wäre jedoch auch möglich, dass die Halteelemente jeweils an ihrem Transportmittel verbleiben und die Kunststoffvorformlinge von den Halteelementen der ersten Transporteinrichtung auf die Halteelemente der weiteren Transporteinrichtung übergeben werden. So wäre es möglich, dass am Ende eines Heizkreislaufs beispielsweise eine Klammer einer Zwischeneinheit den Kunststoffvorformling greift. Anschließend kann dieser Kunststoffvorformling beschleunigt und auf eine neue Teilung gebracht werden. Anschließend kann der Kunststoffvorformling in das Transportmittel der weiteren Transporteinrichtung eingekoppelt werden. Dabei wäre es möglich, dass das schneller umlaufende Transportmittel den Kunststoffvorformling mittels eines Dorns hält oder auch an dessen Mündung greift. Ein Einlaufstern kann den Kunststoffvorformling, wie an sich bekannt, oberhalb seines Tragrings greifen.

Es wäre weiterhin auch denkbar, dass das vollständige oder nur ein Teil des Halteelements aus dem Transportmittel ausgekoppelt und in das zweite Transportmittel eingekoppelt wird. Dabei wäre es möglich, dass der Kunststoffvorformling gemeinsam mit einem Haltedorn nach unten weggezogen wird und entsprechend wieder eingekoppelt wird. Bei dieser Ausgestaltung wäre es möglich, dass auf ein Greifen des warmen bzw. weichen Kunststoffvorformlings verzichtet wird, jedoch lediglich der Dorn, der diesen Kunststoffvorformling hält, gegriffen wird.

Daneben wäre auch ein Aus- und Einkoppeln mittels magnetischer Elemente denkbar. So könnte beispielsweise auf jedem Halteelement ein Magnet sitzen, sodass mittels Induktion die Einheit aus dem Transportmittel ausgelöst wird, bevorzugt anschließend beschleunigt wird und schließlich in das zweite Transportmittel eingekoppelt werden kann. Dabei könnten Elektromagnete Anwendung finden, welche ein derartiges Aus- und Einkoppeln ermöglichen.

Bei einer weiteren Ausführungsform wäre es auch denkbar, dass die Kunststoffvorformlinge nach Verlassen des ersten Transportmittels mittels einer Beschleunigungseinrichtung, wie etwa einer Transportschnecke, auf eine höhere Transportgeschwindigkeit beschleunigt werden und in diesem Zustand in das zweite Transportmittel eingreifen. Bei einer weiteren Ausgestaltung wäre es auch denkbar, auf die besagte Zwischeneinheit zu verzichten und die Kunststoffvorformlinge bzw. deren Halteelemente direkt von dem Transportmittel der ersten Transporteinrichtung in das Transportmittel der zweiten Transporteinrichtung einzukoppeln.

Bei einer weiteren vorteilhaften Ausführungsform weist die Vorrichtung einen magnetischen Mechanismus zum Fixieren der Halteelemente an wenigstens einem Transportmittel auf.

Vorteilhaft weist die Vorrichtung, wie oben erwähnt, eine Beschleunigungseinheit auf, welche die Kunststoffvorformlinge bei der Übergabe von der ersten Transporteinrichtung zu der weiteren Transporteinrichtung beschleunigt.

Die vorliegende Erfindung ist weiterhin auf ein Verfahren zum Behandeln von Kunststoffvorformlingen gerichtet, wobei Kunststoffvorformlinge an eine erste Transporteinrichtung übergeben und von dieser ersten Transporteinrichtung transportiert werden und während dieses Transports mittels wenigstens einer Heizeinrichtung erwärmt werden und wobei die Kunststoffvorformlinge nach dem Transport mit der ersten Transporteinrichtung mit einer zweiten Transporteinrichtung transportiert werden und diese zweite Transporteinrichtung einen Abstand zweier aufeinanderfolgender Kunststoffvorformlinge verändert und insbesondere erhöht.

Erfindungsgemäß werden die Kunststoffvorformlinge zwischen dem Transport mit der ersten Transporteinrichtung und dem Transport mit der zweiten Transporteinrichtung mit einer weiteren Transporteinrichtung transportiert, wobei die Kunststoffvorformlinge wenigstens zeitweise während des Transports mit der weiteren Transporteinrichtung mit einer größeren Teilung transportiert werden als während des Transports mit der ersten Transporteinrichtung.

Daher wird auch verfahrensseitig vorgeschlagen, dass eine zweifache Beschleunigung der Kunststoffvorformlinge bzw. eine zweifache Veränderung und insbesondere Vergrößerung der Teilung vorgenommen wird.

Bei einer weiteren vorteilhaften Ausführungsform weist die weitere Transporteinrichtung ein umlaufendes Transportmittel auf, welches insbesondere die Kunststoffvorformlinge mit einer konstanten Teilung transportiert. Bevorzugt ist daher die Teilung während des Transports mit der ersten Transporteinrichtung konstant und bevorzugt ist auch die Teilung bei dem Transport mit der weiteren Transporteinrichtung konstant. Vorteilhaft ist zwischen der ersten und der zweiten Transporteinrichtung eine Beschleunigungsstrecke vorgesehen, auf welcher die Teilung zwischen den einzelnen Kunststoffvorformlingen erhöht wird. Dabei wird jedoch als weitere Transporteinrichtung insbesondere keine weitere Transportschnecke verwendet.

Vorteilhaft verändert jedoch die zweite Transporteinrichtung während des Transports auch die Teilung zwischen den einzelnen Kunststoffvorformlingen.

Bei einer weiteren vorteilhaften Ausführungsform werden die Kunststoffvorformlinge an die weitere Transporteinrichtung übergeben.

Bei einer weiteren vorteilhaften Ausführungsform wird auch wenigstens zeitweise eine Bewegungsgeschwindigkeit und/oder eine Teilung zweier aufeinanderfolgenden Halteelemente für Kunststoffvorformlinge verzögert bzw. verkleinert. Insbesondere kann dies bei einer Übergabe der Halteelemente von der weiteren Transporteinrichtung wieder an die erste Transporteinrichtung erfolgen.

Bevorzugt ist eine Teilung bei der ersten Transporteinrichtung bzw. während des Transports mit der ersten Transporteinrichtung konstant. Bevorzugt ist die Teilung auch bei der weiteren Transporteinrichtung bzw. während des Transports mit der weiteren Transporteinrichtung konstant. Bevorzugt ist zwischen der ersten Transporteinrichtung und der weiteren Transporteinrichtung eine Beschleunigungsstrecke vorgesehen.

Bevorzugt weist die Vorrichtung keine Transportschnecke auf. Besonders bevorzugt verändert die zweite Transporteinrichtung eine Teilung während des Transports der Kunststoffvorformlinge. Bevorzugt gibt es auch eine Verzögerungsstrecke bei der Übergabe von Halteelementen von der weiteren Transporteinrichtung an die erste Transporteinrichtung.

Weitere vorteilhafte Ausführungsformen ergeben sich aus den beigefügten Zeichnungen. Darin zeigen:
- Fig. 1: Eine Vorrichtung zum Erwärmen von Kunststoffvorformlingen nach dem Stand der Technik;
- Fig. 2: eine schematische Darstellung einer erfindungsgemäßen Vorrichtung;
- Fig. 3a: eine Detailansicht der Vorrichtung aus Fig. 2;
- Fig. 3b: eine Detaildarstellung der in Fig. 3a gezeigten Vorrichtung; und
- Fig. 4: eine mögliche Ausführungsform eines Beschleunigungsmechanismus.

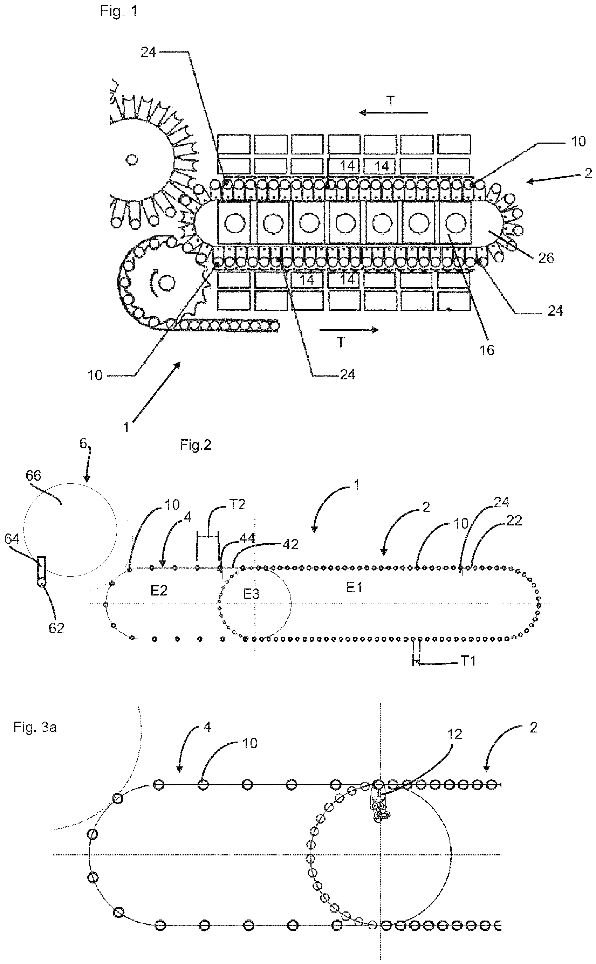

Fig. 1 zeigt eine schematische Darstellung einer Vorrichtung zum Erwärmen von Kunststoffvorformlingen. Die Kunststoffvorformlinge 10 werden der Vorrichtung 1 über eine Zuführschiene 52 sowie einen Eintaktstern 54 vereinzelt zugeführt. Bei der in Fig. 1 gezeigten Darstellung sind die Einrichtungen zur Erzeugung des Teilungsverzugs nicht dargestellt, es wäre jedoch möglich, dass der Eintaktstern die Kunststoffvorformlinge nicht, wie in Fig. 1 gezeigt, direkt an die erste Transporteinrichtung 2 übergibt, sondern an die weitere Transporteinrichtung 4, die in den nachfolgenden Figuren dargestellt ist.

Mittels der Transporteinrichtung 2 werden die Kunststoffvorformlinge durch die Vorrichtung 1 gefördert und dabei an einer Vielzahl von Heizeinrichtungen 14 vorbeitransportiert und von diesen erwärmt. Dabei erfolgt bevorzugt gleichzeitig eine Drehung der Kunststoffvorformlinge um deren Längsrichtung. Das Bezugszeichen 16 kennzeichnet eine Kühleinrichtung, welche die Kunststoffvorformlinge 10 bzw. deren Außenoberflächen mit Kühlluft kühlt. Das Bezugszeichen 26 kennzeichnet einen Umlenkbereich der Transporteinrichtung 2, in dem die Transportrichtung der Kunststoffvorformlinge umgekehrt wird. Die Bezugszeichen 24 kennzeichnen Halteeinrichtungen zum Halten der Kunststoffvorformlinge 10.

Fig. 2 zeigt eine schematische Darstellung einer erfindungsgemäßen Vorrichtung 1 zum Behandeln von Kunststoffvorformlingen. Dabei ist wiederum die erste Transporteinrichtung 2 dargestellt, welche hier die Kunststoffvorformlinge 10 an Erwärmungseinrichtungen (nicht gezeigt) vorbeiführt. Diese erste Transporteinrichtung 2 weist dabei ein umlaufendes Transportmittel 22, wie beispielsweise eine Transportkette, auf. An dieser Transportkette 22 ist eine Vielzahl von Halteelementen 24 (nur eines dargestellt) angeordnet, welche wiederum zum Halten der Kunststoffvorformlinge 10 dienen.

Das Bezugszeichen E1 bezieht sich auf eine Ebene, welche von dem Transportmittel 22 umschlossen wird.

Das Bezugszeichen 4 kennzeichnet die weitere Transporteinrichtung, welche ebenfalls zum Transportieren der Kunststoffvorformlinge 10 dient. Zu diesem Zweck ist an einem ebenfalls umlaufenden Transportmittel 42, wie einer Transportkette, eine Vielzahl von Halteelementen 44 angeordnet, welche jeweils zum Halten der Kunststoffvorformlinge dienen. Das Bezugszeichen E2 kennzeichnet eine Ebene, welche von dem umlaufenden Transportmittel 44 umschlossen wird. Man erkennt, dass sich die Ebenen E1 und E2 überschneiden, insbesondere in dem Schnittbereich E3.

Die Kunststoffvorformlinge werden zunächst an der ersten Transporteinrichtung 2 geführt und anschließend an die weitere Transporteinrichtung 4 übergeben. Man erkennt, dass hierbei eine Teilung T2 zwischen den einzelnen Kunststoffvorformlingen größer ist, als eine Teilung T1 im Bereich der ersten Transporteinrichtung. Damit wird zumindest im Laufe der Übergabe der Kunststoffvorformlinge von der ersten Transporteinrichtung 2 auf die weitere Transporteinrichtung 4 eine Teilung zwischen den Kunststoffvorformlingen vergrößert. Auch transportiert die weitere Transporteinrichtung 4 die Kunststoffvorformlinge 10 mit einer höheren Umlaufgeschwindigkeit als die erste Transporteinrichtung 2.

An die weitere Transporteinrichtung 4 schließt sich die zweite Transporteinrichtung 6 an, bei der es sich hier um einen sogenannten Teilungsverzugsstern handelt. Diese zweite Transporteinrichtung 6 weist dabei eine Vielzahl von Halteeinrichtungen 62 auf (nur eine ist dargestellt), welche bevorzugt schwenkbar an einem Träger der zweiten Transporteinrichtung 6 angeordnet sind. Das Bezugszeichen 64 kennzeichnet einen Arm, an dem die Halteeinrichtung 62 angeordnet ist. Das Bezugszeichen 66 kennzeichnet den drehbaren Träger, an dem die einzelnen Arme 64 und damit auch die Halteeinrichtungen 62 angeordnet sind. Auch diese zweite Transporteinrichtung 6 dient dabei zum Verändern und insbesondere Erhöhen einer Teilung zwischen den Kunststoffvorformlingen. Dies bedeutet, dass die Teilung T2 noch weiter vergrößert wird.

Fig. 3a zeigt eine Detaildarstellung der in Fig. 2 gezeigten Vorrichtung 1. Man erkennt hier auch eine Beschleunigungseinrichtung 12, welche hier zum Umsetzen der Kunststoffvorformlinge von der ersten Transporteinrichtung 2 auf die weitere Transporteinrichtung 4 dient.

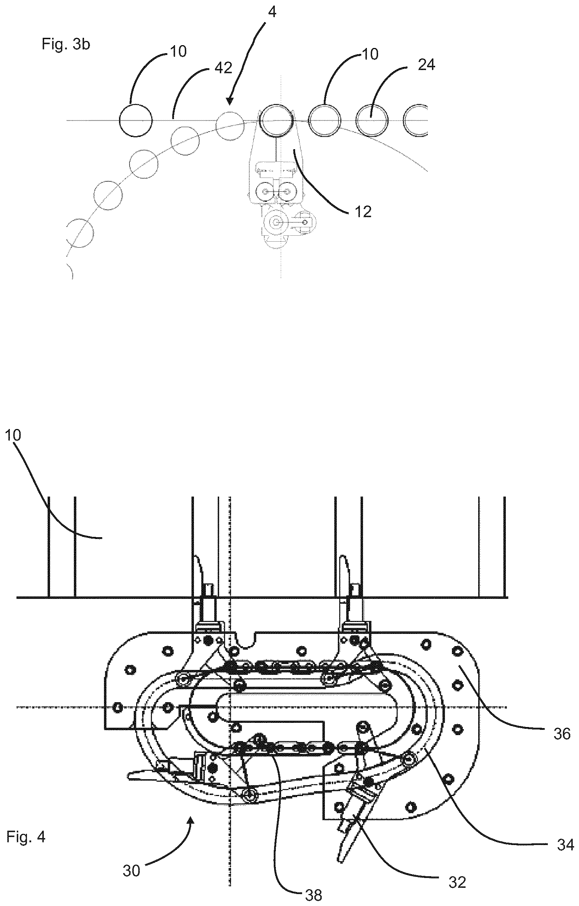

Fig. 3b zeigt eine vergrößerte Darstellung dieser Beschleunigungseinrichtung 12. Bei dieser Beschleunigungseinrichtung 12 kann es sich hier um ein Greifelement handeln, welches, wie in Fig. 3b gezeigt, die Kunststoffvorformlinge von den Halteelementen 24 abnimmt und auf weitere (nicht gezeigte) Halteelemente der weiteren Transporteinrichtung 4 umsetzt. Es ist jedoch hier auch möglich, dass diese Beschleunigungseinrichtung 12 die Halteelemente 24 gemeinsam mit den daran angeordneten Kunststoffvorformlingen 10 auf das Transportmittel 42 der weiteren Transporteinrichtung umsetzt.

Das hier in den Figuren beschriebene Prinzip ähnelt dem einer Seilbahn, wobei hier jedoch bei der Übergabe von der ersten Transporteinrichtung auf die weitere Transporteinrichtung beschleunigt wird und damit bei der Übergabe schneller gefahren wird. Bei der Umlenkung kann das Halteelement bzw. ein Dorn auf das zweite Transportmittel bzw. ein zweites Seil umgehängt werden, auf dem es anschließend mit einer höheren, beispielsweise einer dreifachen, Geschwindigkeit fährt. Auf diese Weise haben die Kunststoffvorformlinge bzw. deren Halteelemente auf dem Transportmittel der weiteren Transporteinrichtung 4 eine höhere, beispielsweise dreifache, Teilung und es ist weiterhin möglich, dass das Halteelement bzw. der Dorn wieder auf seiner ursprünglichen Position einkoppelt. Damit kann hier das gesamte Halteelement mit dem darin angeordneten Kunststoffvorformling ausgekoppelt und auf das Transportmittel 42 wieder eingekoppelt werden.

Falls, wie in Fig. 3b veranschaulicht, der Kunststoffvorformling abgezogen wird, wäre es möglich, dass der Kunststoffvorformling am Ende des Heizkreislaufs von einer Klammer einer Zwischeneinheit gegriffen wird, anschließend beschleunigt und auf eine neue Teilung gebracht wird. Weiterhin kann dann der Kunststoffvorformling auf das neue Transportmittel eingekoppelt werden. Dabei könnte das weitere (umlaufende) Transportmittel 42 den Kunststoffvorformling ebenfalls mit einem Dorn halten oder auch an seiner Mündung greifen.

In diesem Zusammenhang wäre es möglich, dass die erste Transporteinrichtung Haltedorne aufweist, welche in die Mündungen der Behältnisse eingreifen und die weitere Transporteinrichtung Greifklammern, welche beispielsweise den Kunststoffvorformling unterhalb seines Tragrings greifen. Auch die umgekehrte Ausgestaltung wäre denkbar, nämlich dass die erste Transporteinrichtung Greifelemente aufweist, welche die Kunststoffvorformlinge an ihren Mündungen, beispielsweise unter deren Tragringen greifen und die weitere Transporteinrichtung Haltedorne aufweist, welche in die Mündungen der Kunststoffvorformlinge eintreten. Auch wäre es möglich, dass sowohl die erste Transporteinrichtung als auch die weitere Transporteinrichtung jeweils Haltedorne aufweisen, welche in die Mündungen der Behältnisse eingreifen oder auch jeweils Greifelemente aufweisen, welche die Kunststoffvorformlinge an ihren Mündungen greifen.

Fig. 4 zeigt eine weitere Ausführungsform einer erfindungsgemäßen Vorrichtung. Genauer ist hier eine Beschleunigungseinrichtung dargestellt, welche beispielsweise zwischen der ersten Transporteinrichtung 2 und der weiteren Transporteinrichtung 4 angeordnet sein kann und zur Beschleunigung der Kunststoffvorformlinge 10 und/oder der Halteeinrichtungen mit den daran angeordneten Kunststoffvorformlingen dient.

Bei dieser Ausführungsform können umlaufende Schiebeelemente 32 vorgesehen sein, welche insgesamt in einer Führungsschiene oder einem Führungsband 34 geführt werden. Durch die Ausgestaltung der Schiene bzw. der einzelnen Krümmungen kann erreicht werden, dass hier nur schematisch dargestellte Kunststoffvorformlinge bzw. Halteelemente für die Kunststoffvorformlinge auseinandergetrennt und auf Teilung gezogen werden. Das Bezugszeichen 36 kennzeichnet einen Träger, an dem die Schiebeelemente 32 umlaufend angeordnet sind. Durch die Ausgestaltung der Schiene bzw. des Bandes 34 und einer weiteren, bevorzugt innenliegenden (und insbesondere ebenfalls umlaufenden) Schiene bzw. Band 38 kann erreicht werden, dass die Schiebeelemente 32 jeweils in Lücken zwischen zwei benachbarte Kunststoffvorformlinge oder deren Halteelemente eingreifen und so während der Bewegung den Abstand zwischen zwei aufeinanderfolgenden Halteelementen oder Kunststoffvorformlingen erhöhen Das "auf Lücke ziehen" wird insbesondere dadurch erreicht, dass die Geschwindigkeit der zweiten Schiene bzw. des zweiten Bandes 38 höher ist, als die der ersten Schiene bzw. des ersten Bandes 34.

Bei einer weiteren Ausgestaltung wäre auch ein magnetisches Kopplungssystem denkbar. So könnte beispielsweise an jedem Halteelement ein Magnet angeordnet sein, so dass mithilfe von Induktion die Einheit aus dem Transportmittel, wie einer Kette, gelöst werden kann, anschließend auf die zweite Geschwindigkeit beschleunigt werden kann und in die zweite Kette bzw. das zweite Transportmittel eingekoppelt werden kann.

### Bezugszeichenliste

- 1: Vorrichtung
- 2: erste Transporteinrichtung
- 4: weitere Transporteinrichtung
- 6: zweite Transporteinrichtung
- 10: Kunststoffvorformlinge
- 12: Beschleunigungseinrichtung
- 14: Heizeinrichtung
- 16: Kühleinrichtung
- 22: umlaufendes Transportmittel
- 24: Halteelemente
- 26: Umlenkbereich
- 32: Schiebeelemente
- 34: Führungsschiene bzw. Führungsband
- 36: Träger
- 38: weitere Schiene bzw. Band
- 42: umlaufendes Transportmittel
- 44: Halteelemente
- 52: Zuführschiene
- 54: Eintaktstern
- 62: Halteeinrichtung
- 64: Arm
- 66: Träger

- E1, E2: Ebenen
- E3: Schnittbereich
- T1: Teilung im Bereich der ersten Transporteinrichtung
- T2: Teilung im Bereich der weiteren Transporteinrichtung

## Patentansprüche

1. Vorrichtung (1) zum Behandeln von Kunststoffvorformlingen (10) mit einer ersten Transporteinrichtung (2), welche geeignet und bestimmt ist die Kunststoffvorformlinge (10) entlang eines vorgegebenen Transportpfads (T) mit einer ersten vorgegebenen Teilung (T1) zu transportieren, mit wenigstens einer Erwärmungseinrichtung, welche die Kunststoffvorformlinge (10) wenigstens zeitweise während ihres Transports erwärmt und mit einer in der Transportrichtung der Kunststoffvorformlinge (10) stromabwärts bezüglich der ersten Transporteinrichtung (2) angeordneten zweiten Transporteinrichtung (6), welche dazu geeignet und bestimmt ist die Kunststoffvorformlinge zu transportieren und welche eine Vielzahl von Halteeinrichtungen (62) zum Halten der Kunststoffvorformlinge (10) aufweist, und welche dazu geeignet und bestimmt ist, eine Teilung zwischen aufeinanderfolgenden Kunststoffvorformlingen zu verändern, wobei die Vorrichtung (1) einen weiteren, wenigstens bereichsweise in der Transportrichtung der Kunststoffvorformlinge (10) zwischen der ersten Transporteinrichtung (2) und der zweiten Transporteinrichtung (6) angeordneten Transportabschnitt aufweist, wobei eine weitere Transporteinrichtung zum Transportieren der Kunststoffvorformlinge vorgesehen ist, welche den Transportabschnitt bildet, in dem eine Teilung zwischen den Kunststoffvorformlingen (10) verändert wird, und wobei die Kunststoffvorformlinge (10) zwischen dem Transport mit der ersten Transporteinrichtung (2) und dem Transport mit der zweiten Transporteinrichtung mit der weiteren Transporteinrichtung transportierbar sind, wobei die Kunststoffvorformlinge (10) wenigstens zeitweise während des Transports mit der weiteren Transporteinrichtung (4) mit einer größeren Teilung (T2) transportierbar sind als während des Transports mit der ersten Transporteinrichtung (2), und weiter wobei die Vorrichtung nach der zweiten Transporteinrichtung (6) eine Umformungseinrichtung aufweist,
**dadurch gekennzeichnet, dass** es sich bei der zweiten Transporteinrichtung (6) um einen Teilungsverzugsstern handelt.

2. Vorrichtung (1) nach Anspruch 1,
**dadurch gekennzeichnet, dass**
die erste Transporteinrichtung (2) ein umlaufendes Transportmittel (22) aufweist, an dem eine Vielzahl von Halteelementen (24) zum Halten der Kunststoffvorformlinge (10) angeordnet ist.

3. Vorrichtung (1) nach Anspruch 1 oder 2,
**dadurch gekennzeichnet, dass**
die weitere Transporteinrichtung (4) ein umlaufendes Transportmittel (42) aufweist, an dem eine Vielzahl von Halteelementen (44) zum Halten der Kunststoffvorformlinge (10) angeordnet ist.

4. Vorrichtung (1) nach zumindest einem der vorhergehenden Ansprüche,
**dadurch gekennzeichnet, dass**
die weitere Transporteinrichtung (4) einen Träger aufweist und wenigstens ein Halteelement, welches beweglich gegenüber diesem Träger angeordnet ist.

5. Vorrichtung (1) nach zumindest einem der vorhergehenden Ansprüche,
**dadurch gekennzeichnet, dass**
eine von dem umlaufenden Transportmittel (22) der ersten Transporteinrichtung (2) eingeschlossene Ebene (E1) und eine von dem umlaufenden Transportmittel (42) der weiteren Transporteinrichtung eingeschlossene Ebene (E2) miteinander überlappen.

6. Vorrichtung (1) nach wenigstens einem der vorangegangenen Ansprüche,
**dadurch gekennzeichnet, dass**
die weitere Transporteinrichtung (4) zur Übernahme von Kunststoffvorformlingen von der ersten Transporteinrichtung (2) und/oder zur Übergabe von Kunststoffvorformlingen an die erste Transporteinrichtung (2) dient.

7. Vorrichtung (1) nach wenigstens einem der vorangegangenen Ansprüche,
**dadurch gekennzeichnet, dass**
die Vorrichtung (1) wenigstens ein Halteelement zum Halten der Kunststoffvorformlinge aufweist, welches zeitweise an einem Transportmittel (22) der ersten Transporteinrichtung (2) und wenigstens zeitweise an einem Transportmittel (42) der weiteren Transporteinrichtung (4) angeordnet ist.

8. Vorrichtung (1) nach wenigstens einem der vorangegangenen Ansprüche,
**dadurch gekennzeichnet, dass**
die Vorrichtung eine Beschleunigungseinheit (12) aufweist, welche die Kunststoffvorformlinge (10) bei einer Übergabe von der ersten Transporteinrichtung (2) zu der weiteren Transporteinrichtung (4) beschleunigt.

9. Verfahren zum Behandeln von Kunststoffvorformlingen (10), wobei Kunststoffvorformlinge an eine erste Transporteinrichtung (2) übergeben und von dieser ersten Transporteinrichtung (2) transportiert werden und während dieses Transports mittels wenigstens einer Heizeinrichtung erwärmt werden und wobei die Kunststoffvorformlinge nach dem Transport mit der ersten Transporteinrichtung mit einer zweiten Transporteinrichtung (6) transportiert werden und diese zweite Transporteinrichtung (6) eine Teilung zweier aufeinander folgender Kunststoffvorformlinge verändert und insbesondere erhöht,
wobei die Kunststoffvorformlinge zwischen dem Transport mit der ersten Transporteinrichtung (2) und dem Transport mit der zweiten Transporteinrichtung mit einer weiteren Transporteinrichtung transportiert werden, wobei die Kunststoffvorformlinge wenigstens zeitweise während des Transports mit der weiteren Transporteinrichtung (4) mit einer größeren Teilung (T2) transportiert werden als während des Transports mit der ersten Transporteinrichtung (2), und weiter wobei die Vorrichtung nach der zweiten Transporteinrichtung eine Umformungseinrichtung aufweist,
**dadurch gekennzeichnet, dass** es sich bei der zweiten Transporteinrichtung (6) um einen Teilungsverzugsstern handelt.

10. Verfahren nach Anspruch 9,
**dadurch gekennzeichnet, dass**
die weitere Transporteinrichtung (4) ein umlaufendes Transportmittel (42) aufweist, welches insbesondere die Kunststoffvorformlinge (10) mit einer konstanten Teilung transportiert.

## Claims

1. An apparatus (1) for treating plastic preforms (10), with a first transport facility (2) which is suitable and intended for transporting the plastic preforms (10) along a predefined transport path (T) at a first predefined pitch (T1), with at least one heating means heating the plastic preforms (10) at least at times during their transportation and with a second transport facility (6) arranged downstream with respect to the first transport facility (2) in transport direction of the plastic preforms (10), which is suitable and intended for transporting the plastic preforms and which comprises a plurality of holding means (62) for holding the plastic preforms (10) and which is suitable and intended to alter a pitch between consecutive plastic preforms,
wherein the apparatus (1) comprises, at least in sections, a further transport section arranged in the transport direction of the plastic preforms (10) between the first transport facility (2) and the second transport facility (6), wherein a further transport facility for transporting the plastic preforms is provided which forms the transport section in which a pitch between the plastic preforms (10) is altered and wherein the plastic preforms (10) are transportable between the transport with the first transport facility (2) and the transport with the second transport facility with the further transport facility, wherein the plastic preforms (10) are transportable at least temporarily during transport with the further transport facility (4) with a lager pitch (T2) than during transport with the first transport facility (2), and further wherein the apparatus comprises a forming means after the second transport facility (6),
**characterized in that**
the second transport facility (6) is a pitch distortion star.

2. The apparatus (1) according to claim 1,
**characterized in that**
the first transport facility (2) comprises a circulating transport means (22), on which a plurality of holding elements (24) for holding the plastic preforms (10) is arranged.

3. The apparatus (1) according to claim 1 or 2,
**characterized in that**
the further transport facility (4) comprises a circulating transport means (42), on which a plurality of holding elements (44) for holding the plastic preforms (10) is arranged.

4. The apparatus (1) according to at least one of the preceding claims, **characterized in that**
the further transport facility (4) comprises a carrier and at least one holding element which is movably arranged with respect to this carrier.

5. The apparatus (1) according to at least one of the preceding claims, **characterized in that**
a plane (E1) enclosed by the circulating transport means (22) of the first transport facility (2) and a plane (E2) enclosed by the circulating transport means (42) of the further transport facility overlap one another.

6. The apparatus (1) according to at least one of the preceding claims, **characterized in that**
the further transport facility (4) serves to accept plastic preforms from the first transport facility (2) and/or to transfer the plastic preforms to the first transport facility (2).

7. The apparatus (1) according to at least one of the preceding claims, **characterized in that**
the apparatus (1) comprises at least one holding element for holding the plastic preforms, which at times is arranged on a transport means (22) of the first transport facility (2) and at least at times on a transport means (42) of the further transport facility (4).

8. The apparatus (1) according to at least one of the preceding claims, **characterized in that**
the apparatus (1) comprises an acceleration unit (12), which accelerates the plastic preforms (10) during transfer from the first transport facility (2) to the further transport facility (4).

9. A method for treating plastic preforms (10), wherein plastic preforms are transferred to a first transport facility (2) and are transported by this first transport facility (2) and during this transport are heated by means of at least one heating means, and wherein the plastic preforms after transport with the first transport facility are transported with a second transport facility (6), and this second transport facility (6) alters and in particular increases a pitch between two consecutive plastic preforms,
wherein the plastic preforms, between transportation with the first transport facility (2) and transportation with the second transport facility, are transported with a further transport facility, wherein the plastic preforms at least at times during transportation with the further transport facility (4), are transported at a larger pitch (T2) than during transportation with the first transport facility (2), and further wherein the apparatus comprises a forming means after the second transport facility,
**characterized in that**
the second transport facility (6) is a pitch distortion star.

10. The method according to claim 9,
**characterized in that**
the further transport facility (4) comprises a circulating transport means (42), which in particular transports the plastic preforms (10) at a constant pitch.

## Revendications

1. Dispositif (1) servant à traiter des préformes en matière plastique (10) avec un premier système de transport (2), qui est adapté pour et se destine à transporter les préformes en matière plastique (10) le long d'une voie de transport (T) spécifiée avec une première séparation (T1) spécifiée, avec au moins un système de réchauffage, qui réchauffe les préformes en matière plastique (10) au moins par intermittence pendant leur transport, et avec un deuxième système de transport (6) disposé, dans la direction de transport des préformes en matière plastique (10) en aval par rapport au premier système de transport (2), lequel est adapté pour et se destine à transporter les préformes en matière plastique et lequel présente une pluralité de systèmes de maintien (62) servant à maintenir les préformes en matière plastique (10), et lequel est adapté pour et se destine à modifier une séparation entre des préformes en matière plastique se suivant les unes les autres,
dans lequel le dispositif (1) présente un autre tronçon de transport disposé au moins par endroits dans la direction de transport des préformes en matière plastique (10) entre le premier système de transport (2) et le deuxième système de transport (6), dans lequel un autre système de transport est prévu pour transporter les préformes en matière plastique, lequel forme le tronçon de transport, dans lequel une séparation entre les préformes en matière plastique (10) est modifiée, et dans lequel les préformes en matière plastique (10) peuvent être transportées entre le transport avec le premier système de transport (2) et le transport avec le deuxième système de transport avec l'autre système de transport, dans lequel les préformes en matière plastique (10) peuvent être transportées au moins par intermittence pendant le transport avec l'autre système de transport (4) avec une séparation (T2) plus grande que pendant le transport avec le premier système de transport (2), et dans lequel du reste le dispositif présente un système de façonnage après le deuxième système de transport (6),
**caractérisé en ce que**
le deuxième système de transport (6) est une étoile de retardement de séparation.

2. Dispositif (1) selon la revendication 1,
**caractérisé en ce que**
le premier système de transport (2) présente un moyen de transport (22) circulant en périphérie, au niveau duquel une pluralité d'éléments de maintien (24) servant à maintenir les préformes en matière plastique (10) est disposée.

3. Dispositif (1) selon la revendication 1 ou 2,
**caractérisé en ce que**
l'autre système de transport (4) présente un moyen de transport (42) circulant en périphérie, au niveau duquel une pluralité d'éléments de maintien (44) servant à maintenir les préformes en matière plastique (10) est disposée.

4. Dispositif (1) selon au moins l'une quelconque des revendications précédentes,
**caractérisé en ce que**
l'autre système de transport (4) présente un support et au moins un élément de maintien, qui est disposé de manière mobile par rapport audit support.

5. Dispositif (1) selon au moins l'une quelconque des revendications précédentes,
**caractérisé en ce que**
un plan (E1) enfermé par le moyen de transport (22) circulant en périphérie du premier système de transport (2) et un plan (E2) enfermé par le moyen de transport (42) circulant en périphérie de l'autre système de transport se chevauchent l'un l'autre.

6. Dispositif (1) selon au moins l'une quelconque des revendications précédentes,
**caractérisé en ce que**
l'autre système de transport (4) sert à réceptionner des préformes en matière plastique provenant du premier système de transport (2) et/ou servant à transférer des préformes en matière plastique au premier système de transport (2).

7. Dispositif (1) selon au moins l'une quelconque des revendications précédentes,
**caractérisé en ce que**
le dispositif (1) présente au moins un élément de maintien servant à maintenir les préformes en matière plastique, lequel est disposé par intermittence au niveau d'un moyen de transport (22) du premier système de transport (2) et au moins par intermittence au niveau d'un moyen de transport (42) de l'autre système de transport (4).

8. Dispositif (1) selon au moins l'une quelconque des revendications précédentes,
**caractérisé en ce que**
le dispositif présente une unité d'accélération (12), laquelle accélère les préformes en matière plastique (10) lors d'un transfert depuis le premier système de transport (2) vers l'autre système de transport (4).

9. Procédé servant à traiter des préformes en matière plastique (10), dans lequel des préformes en matière plastique sont transférées à un premier système de transport (2) et sont transportées par ledit premier système de transport (2) et sont réchauffées pendant ledit transport au moyen d'au moins un système de chauffage et dans lequel les préformes en matière plastique sont transportées avec un deuxième système de transport (6) après le transport avec le premier système de transport et ledit deuxième système de transport (6) modifie et en particulier accentue une séparation de deux préformes en matière plastique se suivant l'une l'autre,
dans lequel les préformes en matière plastique sont transportées entre le transport avec le premier système de transport (2) et le transport avec le deuxième système de transport avec un autre système de transport, dans lequel les préformes en matière plastique sont transportées au moins par intermittence pendant le transport avec l'autre système de transport (4) avec une séparation (T2) plus grande que pendant le transport avec le premier système de transport (2), et dans lequel par ailleurs le dispositif présente un système de façonnage après le deuxième système de transport,
**caractérisé en ce que**
le deuxième système de transport (6) est une étoile de retardement de séparation.

10. Procédé selon la revendication 9,
**caractérisé en ce que**
l'autre système de transport (4) présente un moyen de transport (42) circulant en périphérie, lequel transporte en particulier les préformes en matière plastique (10) avec une séparation constante.
